# EUROPÄISCHE PATENTSCHRIFT

(11) **EP 0 723 252 B1**
(45) Veröffentlichungstag und Bekanntmachung des Hinweises auf die Patenterteilung: **02.01.2002**
(21) Anmeldenummer: 96100568.3
(22) Anmeldetag: 16.01.1996
(51) Int. Cl.: G07D 7/00

(54) **Vorrichtung zur Prüfung magnetischer Eigenschaften von Blattgut, wie z. B. Banknoten oder Wertpapiere**
Device for testing the magnetic properties of sheet material, e.g. bank notes or valuable papers
Dispositif pour examiner des particularités magnétiques des matériaux sous forme de feuilles comme p. ex. des billets de banque ou des papiers de valeur

(30) Priorität: 17.01.1995 DE 19501245
(43) Veröffentlichungstag der Anmeldung: 24.07.1996
(73) Patentinhaber: Giesecke & Devrient GmbH, 81677 München (DE)
(72) Erfinder: Bloss, Michael, D-81241 München (DE); Stein, Dieter, D-83607 Holzkirchen (DE)
(74) Vertreter: Klunker . Schmitt-Nilson . Hirsch

(56) Entgegenhaltungen:
- EP-A- 0 295 229
- EP-A- 0 589 195
- DE-A- 1 953 542

## Beschreibung

Die Erfindung betrifft eine Vorrichtung zur Prüfung von magnetischen Eigenschaften von Blattgut, wie z.B. Banknoten oder Wertpapiere, gemäß dem Oberbegriff des Hauptanspruchs.

Zur Erzeugung magnetischer Eigenschaften wird das Blattgut im allgemeinen mit permanentmagnetischen oder weichmagnetischen Partikeln versehen. Zum einen werden diese magnetischen Partikel bei der Produktion des Blattgutes, z.B. als Sicherheitsfaden oder statistisch verteilt, direkt in das Blattgut eingebracht oder zum anderen später auf das Blattgut, z.B. in Form magnetischer Druckfarbe, aufgebracht. Mit der magnetischen Druckfarbe können beispielsweise einfache Codes oder auch komplizierte Druckbilder erzeugt werden.

Zur Messung der magnetischen Eigenschaften wird das Blattgut in einem zwischen dem Blattgut und einem magnetischem Meßsystem definierten Meßabstand an diesem magnetischem Meßsystem vorbeigeführt. Das Meßsystem detektiert die magnetischen Eigenschaften des Blattgutes und überträgt die detektierten Signale an eine Auswerteeinheit. Anhand der detektierten Signale kann die Auswerteeinheit beispielsweise die Echtheit des Blattgutes durch einen Vergleich mit intern gespeicherten Referenzmustern prüfen.

Eine Vorrichtung der obengenannten Art zur Prüfung von Blattgut mit magnetischen Eigenschaften ist aus der EP 0 467 202 bekannt. Speziell werden hier verschiedene Meßsysteme beschrieben, die entweder aus einem einzelnen oder aus mehreren Sensoren zusammengesetzt sein können. Die gezeigten Meßsysteme sind so ausgeführt, daß sie auch magnetische Partikel geringerer Remanenz im Blattgut ausreichend zuverlässig detektieren können.

Ferner wird gezeigt, wie die Dimensionierung von Sensoren innerhalb eines Meßsystems zu wählen ist, um eine vorgegebene örtliche Auflösung zu erreichen. Um auf einem Blattgut ein magnetisches Druckbild zu erkennen, sollte die örtliche Auflösung etwa 1 mm in Transportrichtung des Blattgutes als auch senkrecht dazu aufweisen. Um eine solche höhe örtliche Auflösung zu erreichen, ist es nötig, daß der Meßabstand etwa halb so groß ist wie die gewünschte örtliche Auflösung.

Eine Transportvorrichtung, die das Blattgut im definierten Meßabstand an dem Meßsystem vorbeiführt, wird nicht beschrieben.

Aus der EP 0 589 195 A2 ist eine Vorrichtung und ein Verfahren zur Überprüfung der magnetischen Eigenschaften von Blattgut bekannt. Zur Überprüfung der Banknoten werden diese lose auf einem Transportmedium liegend an einem Sensor vorbeitransportiert, um die magnetischen Eigenschaften zu ermitteln.

Dem Dokument ist jedoch nicht zu entnehmen, wie das Transportsystem und mit ihm das Transportmedium, gestaltet sein muß, damit eine hohe örtliche Auflösung erreicht werden kann.

Die EP 0 057 520 beschreibt eine Anordnung der obengenannten Art und beschäftigt sich im wesentlichen mit der Detektion in das Blattgut eingebrachter Sicherheitsfäden. Sie zeigt neben der Ausführung des magnetischen Meßsystems auch verschiedene Möglichkeiten zum Transport des Blattgutes.

In einer Ausführung wird das Blattgut zum Transport zwischen Riemen eingeklemmt und zum Meßsystem befördert. Vor dem Meßsystem tritt die Banknote aus dem Riemensystem aus und wird mittels einer Andruckfeder auf das Meßsystem gedrückt. Nach dem Durchgang des Blattgutes durch das Meßsystem wird es von einem weiteren Riemensystem erfaßt und weitertransportiert. Die Dimensionierung der Riemensysteme ist so gewählt, daß der Transport des Blattgutes jederzeit gewährleistet ist.

Nachteilig ist, daß bei dieser Vorrichtung das Blattgut direkt auf das Meßsystem gedrückt wird. Das Meßsystem kann hierbei leicht durch Abrasion beschädigt werden. Weiterhin können durch die Oberflächenrauhigkeit des Blattgutes oder durch am Blattgut haftende Nadeln oder Klammern oder anderer harter Gegenstände Beschädigungen des Meßsystems ausgelöst werden.

Eine weitere Möglichkeit zum Transport der Banknote besteht darin, diese wiederum zwischen Riemen einzuklemmen und die Banknote in diesem eingeklemmten Zustand am Meßsystem vorbeizutransportieren. Der Nachteil dieser Vorrichtung besteht darin, daß aufgrund der Elastizität der Transportriemen Abstandsschwankungen des Meßabstandes verursacht werden. In den Bereichen, in denen das Blattgut nicht von den Riemen eingeklemmt wird, wird zusätzlich durch die Umgebungsluft ein Flattern des Blattgutes bewirkt, was wiederum zu Abstandsschwankungen des Meßabstands führt. Eine Prüfung des Blattgutes mit hoher örtlicher Auflösung ist hier nicht möglich, da die magnetischen Messungen eine Abstandsabhängigkeit vom Meßabstand aufweisen.

Die Aufgabe der Erfindung besteht darin, eine Vorrichtung zur Prüfung magnetischer Eigenschaften von Blattgut vorzuschlagen, mit der magnetische Strukturen in einer hohen örtlichen Auflösung detektiert werden können.

Die Aufgabe wird erfindungsgemäß durch die im kennzeichnenden Teil des Hauptanspruchs angegebenen Merkmale gelöst.

Der Grundgedanke der Erfindung besteht darin, das Blattgut mit einem Transportmedium zu transportieren, wobei das Transportmedium zwischen dem Meßsystem und dem Blattgut angeordnet ist. Der zwischen dem Blattgut und dem Meßsystem definierte Meßabstand wird im wesentlichen durch die Dicke des Transportmediums bestimmt. Die Dicke des Transportmediums wird so gewählt, daß sie kleiner ist als die vorgegebene örtliche Auflösung. Es ist somit möglich, das Blattgut in einem definierten Meßabstand am Meßsystem vorbeizuführen, der kleiner ist als die vorgegebene Auflösung. Bevorzugt wird der Meßabstand kleiner oder gleich der Hälfte der vorgegebenen Auflösung gewählt.

Vorteile der Lösung bestehen darin, daß keine direkte mechanische Wechselwirkung zwischen dem Blattgut und dem Meßsystem besteht. Verschleißprobleme aufgrund von Abrasion durch das Blattgut oder durch im Blattgut mitgeführte harte Gegenstände werden vermieden. Es ist möglich, den Meßabstand gering und gleichzeitig konstant zu halten, daß eine Prüfung des Blattguts mit hoher örtlicher Auflösung durchgeführt werden kann.

Durch die folgenden Maßnahmen kann der Grundgedanke der Erfindung an spezielle Anforderungen angepaßt werden.

Wird die Dicke des Transportmediums gleich dem Meßabstand gewählt, so berühren sich Transportmedium und Meßsystem. Der Verschleiß kann hier gering gehalten werden, in dem das Transportmedium und das Meßsystem einen geringen Reibwert aufweisen. Durch die Paarung von Transportsystem und Meßsystem reiben somit immer dieselben Komponenten miteinander. Aufgrund des geringen Reibwerts zwischen den Komponenten und der Paarung der Komponenten ist eine lange Lebensdauer der Komponenten gewährleistet.

Die Breite des Transportmediums kann gleich der Breite des Meßsystems gewählt werden, so daß das Meßsystem vollständig vom Transportmedium abgedeckt wird. Die Prüfung des Blattguts erfolgt durch das Transportmedium hindurch. Das Meßsystem wird somit zusätzlich vom Transportmedium geschützt und ein Flattern der Banknote wird vermieden, da das Blattgut auf der gesamten Breite des Meßsystems sicher geführt wird.

Wird die Breite des Meßsystems gleich der Breite des Blattguts gewählt, so kann das Blattgut ganzflächig geprüft werden.

In einer ersten Ausführungsform besteht das erfindungsgemäße Transportmedium aus einer rotierenden Trommel, wobei das Blattgut auf der Außenseite der Trommel geführt wird und sich das Meßsystem im Inneren der Trommel befindet. Aufgrund der Geometrie der Trommel kann die Dicke der Trommel sehr gering gewählt werden, ohne die für den Transport nötige Steifigkeit zu verlieren. Für sehr hohe örtliche Auflösungen ist es zudem möglich, das Meßsystem mit der Trommel reibend auszulegen. Der Meßabstand ist dann gleich der Dicke der Trommel. Durch eine geeignete Auslegung mit einem geringen Reibwert zwischen den Komponenten, kann ein nahezu verschleißfreier Kontakt zwischen Meßsystem und Trommel erreicht werden.

In einer weiteren Ausführungsform wird das Transportmedium als Transportband ausgeführt. Um die Variation des Meßabstandes aufgrund der Elastizität des Transportriemens zu minimieren, wird dieser bevorzugt reibend über das Meßsystem geführt. Die maximale Abstandsvariation kann hierbei durch die Andruckkraft zwischen Riemen und Meßsystem eingestellt werden. Durch einen geringen Reibwert zwischen den Komponenten wird der Verschleiß verringert und die Lebensdauer der Komponenten erhöht.

Weitere Vorteile und Weiterbildungen der Erfindung ergeben sich aus den Unteransprüchen sowie aus der nachfolgenden Beschreibung der Ausführungsbeispiele anhand der Figuren.

Es zeigen
- Fig. 1: Prinzipskizze der Erfindung,
- Fig. 2: Seitenansicht einer ersten Ausführungsform mit Trommel,
- Fig. 3: Innenansicht der Trommel,
- Fig. 4: Seitenansicht einer zweiten Ausführungsform mit Transportband.

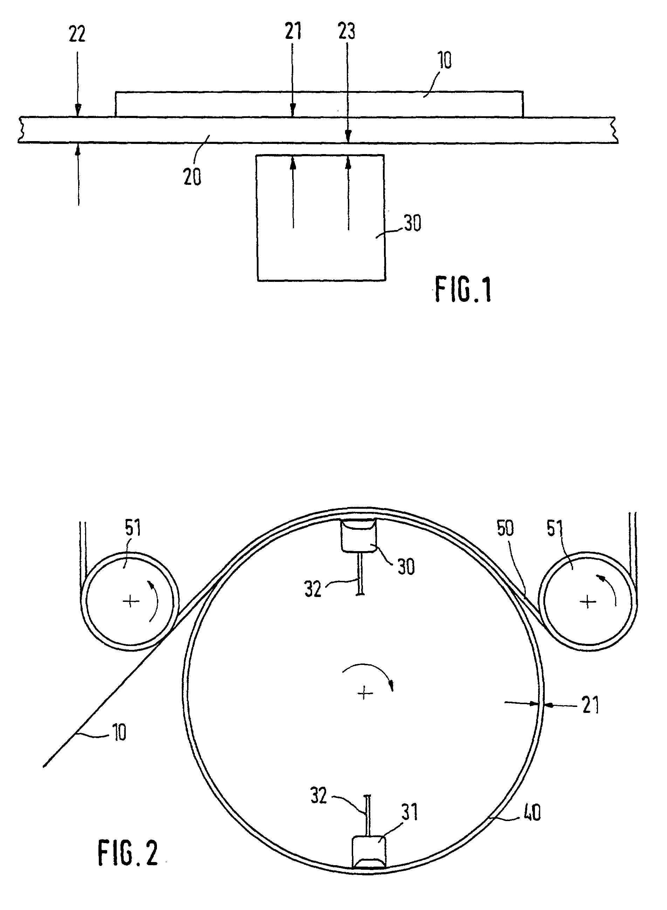

Anhand der Fig. 1 wird zunächst das Prinzip der Erfindung erläutert. Das Blattgut 10 befindet sich auf einem Transportmedium 20. Unter dem Transportmedium 20 ist ein magnetisches Meßsystem 30 angebracht. Das Transportmedium 20 deckt das Meßsystem 30 in seiner gesamten Breite ab. Für eine ganzflächige Prüfung des Blattgutes 10 wird die Breite des Meßsystems 30 gleich der Breite des Blattguts 10 gewählt. Die Prüfung des Blattguts 10 durch das Meßsystem 30 erfolgt durch das Transportmedium 20 hindurch.

Der Meßabstand 21 ist als der Abstand zwischen dem Blattgut 10 und dem Meßsystem 30 definiert. Er wird im wesentlichen durch die Dicke 22 des Transportmediums bestimmt. Ist die Dicke 22 kleiner als der Meßabstand 21 gewählt, so entsteht zwischen dem Transportmedium 20 und dem Meßsystem 30 ein Spalt 23. Die Dicke 22 des Transportmediums wird durch den Meßabstand 21 nach oben begrenzt. Ist die Dicke 22 des Transportmediums gleich dem Meßabstand 21, so verschwindet der Spalt 23 und das Transportmedium 20 berührt das Meßsystem 30. Die durch den Kontakt zwischen Transportmedium 20 und Meßsystem 30 entstehende Reibung kann durch eine entsprechend ausgelegte Reibpaarung mit geringem Reibwert minimiert werden.

Eine minimale Reibung zwischen den Komponenten und somit auch ein minimaler Verschleiß der Komponenten kann zum einen durch eine sehr harte Oberfläche des Meßsystems erreicht werden. Als Oberflächenmaterial eignen sich beispielsweise dünne Schichten wie TiC bzw. TiN, Diamant, Keramik, Hartchrom oder gespritzte Schichten aus z.B. Wolframcarbit, Al₂O₃, TiC, Kohlenstoff oder Molybdän. Andererseits kann die dem Meßsystem zugewandte Seite des Transportmediums mit einer verschleißmindernden Oberfläche ausgestattet werden. Als Material eignen sich hier beispielsweise eine Kunststoffbeschichtung mit Teflon oder ein Gewebeverbund mit verschleißfesten Fasern, wie z.B. Glasfasern, Kohlenstoffasern oder Kevlarfasern.

Die Fig. 2 zeigt eine Seitenansicht einer ersten Ausführungsform, bei der das Transportmedium 20 als Trommel 40 ausgeführt ist. Bei der hier dargestellten Ausführungsform ist das Meßsystem 30 reibend mit der Trommel 40 verbunden. Die Dicke 22 des Transportmediums ist somit gleich dem Meßabstand 21. Vorzugsweise ist zusätzlich zur Trommel 40 ein Andrucksystem vorgesehen, das aus einem Andruckband 50 sowie zwei Umlenkrollen 51 besteht. Das Andrucksystem dient dazu, das Blattgut 10 auf die Trommel 40 zu drücken, so daß Schwankungen des Meßabstands 21 aufgrund der Welligkeit des Blattgutes im Bereich des Meßsystems 30 weitestgehend vermieden werden. Vorzugsweise wird die Breite des Andruckbandes 50 mindestens so breit wie das Transportmedium 22 gewählt.

Um magnetische Verschmutzungen der Trommel 40 feststellen zu können, ist es möglich, mit dem Meßsystem 30 Referenzmessungen in der Blattgutlücke zwischen zwei Blättern vorzunehmen. Optional kann auch ein zweites Meßsystem 31 vorgesehen werden, das so plaziert ist, daß es keine Signale vom Blattgut empfängt und somit lediglich zur Überwachung der magnetischen Verschmutzung der Trommel 40 dient.

Die von den Meßsystemen detektierten Signale werden durch die Versorgungsleitungen 32 an eine hier nicht dargestellte Auswerteeinheit übertragen, die dann anhand der gemessenen Signale die Prüfung des Blattgutes durchführt.

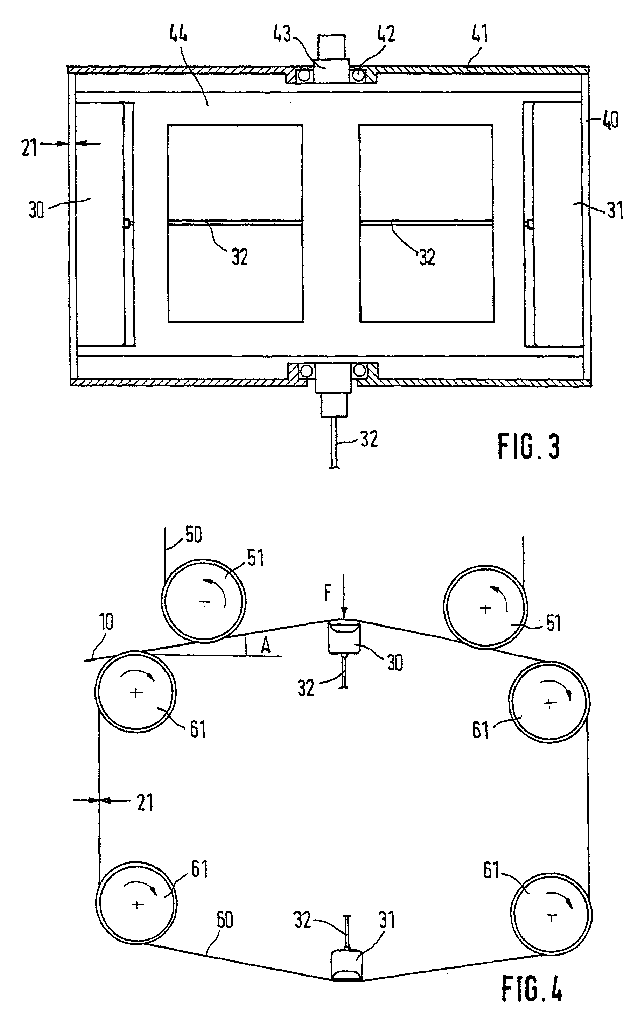

Fig. 3 zeigt eine Innenansicht der Trommel 40. Die Trommel 40 wird mit Hilfe der Trommelwände 41 stabilisiert und in ihrer Lage gehalten. Die Trommelwände 41 sind über die Trommellager 42 mit der ortsfesten Trommelachse 43 verbunden, so daß die Trommel 40 um die Achse 43 rotieren kann. Innerhalb der Trommel 40 befindet sich ein ortsfester Meßsystemhalter 44, der mit der Trommelachse 43 verbunden ist. An dem Meßsystemhalter 44 sind das Meßsystem 30 und das optionale Meßsystem 31 befestigt. Die Versorgungsleitungen 32 werden durch die Trommelachse 43 nach außen geführt.

Der Antrieb der Trommel 40 ist hier aus Übersichtlichkeitsgründen nicht dargestellt. Für den Antrieb ergeben sich mehrere Möglichkeiten. Zum einen kann der Antrieb der Trommel 40 durch einen bewegten Riemen realisiert werden, der die Trommel 40 am Umfang antreibt oder auch direkt durch einen drehzahlgeregelten Motor angetrieben werden. Alternativ dazu kann die Trommel 40 an ihrem Umfang durch eine angetriebene Transportwalze des Transportsystems angetrieben werden, die mit dem Umfang der Trommel 40 über eine Reibkupplung verbunden wird.

Die Fig. 4 zeigt die Seitenansicht einer weiteren Ausführungsform, bei der das Transportmedium 20 als Transportband 60 ausgeführt ist. Das Transportband 60 wird durch Umlenkrollen 61 angetrieben und geführt. Analog zur ersten Ausführungsform ist auch hier ein Andrucksystem, bestehend aus einem Andruckband 50 und zwei Umlenkrollen 51, vorgesehen. Das Blattgut 10 wird zwischen dem Transportband 60 und dem Andruckband 50 geführt. Die Dicke des Transportbandes 60 entspricht dem Meßabstand 21, so daß es zu einer Reibpaarung zwischen dem Transportband 60 und dem Meßsystem 30 kommt.

Um Variationen des Meßabstandes 21, aufgrund der Welligkeit des Blattgutes 10 bzw. der Elastizität des Transportbandes 60 so gering wie möglich zu halten, wird das Blattgut mit einer Kraft F auf das Meßsystem 30 gedrückt. Die Kraft F wird durch die Wahl des Winkels A festgelegt. Bei kleinen Winkeln A ist diese Kraft sehr gering und nimmt bei Vergrößerung dieses Winkels zu.

Auch in dieser Ausführungsform ist ein optionales Meßsystem 31 zur Feststellung magnetischer Verschmutzung des Transportbandes 60 vorgesehen.

In einer hier nicht dargestellten Weiterbildung der Erfindung werden zusätzlich zum Meßsystem 30 weitere Meßsysteme zur Prüfung des Blattguts am Transportmedium 20 vorgesehen. Durch eine geeignete Verschaltung mehrerer Meßsysteme können beispielsweise Störungen durch externe Magnetfelder reduziert werden. Bei Bedarf können auch Teilkomponenten eines Meßsystems auf der Seite des Transportmediums angebracht werden, auf der das Blattgut transportiert wird.

Auf eine explizite Beschreibung des Meßsystems 30 wird verzichtet, da alle derzeit bekannten magnetischen Meßsysteme in der erfindungsgemäßen Vorrichtung verwendet werden können. Beispiele für magnetische Meßsysteme findet man im eingangs zitierten Stand der Technik.

## Patentansprüche

1. Vorrichtung zur Prüfung magnetischer Eigenschaften von Blattgut, wie z.B. Banknoten oder Wertpapieren, mit einer vorgegebenen örtlichen Auflösung, bestehend aus
- mindestens einem magnetischen Meßsystem (30) und
- einem Transportmedium (20), mit dem das Blattgut (10) in einem zwischen dem Blattgut (10) und dem Meßsystem (30) definierten Meßabstand (21) am Meßsystem (30) vorbeigeführt wird,
**dadurch gekennzeichnet, daß**
- das Transportmedium (20) zwischen dem Meßsystem (30) und dem Blattgut (10) angeordnet ist,
- ein Andruckband (50) das Blattgut (10) auf das Transportmedium (20) drückt,
- das Meßsystem (30) in seiner gesamten Breite vom Transportmedium (20) abgedeckt wird,
- der Meßabstand (21) im wesentlichen durch die Dicke (22) des Transportmediums bestimmt wird und
- die Dicke (22) des Transportmediums kleiner ist als die vorgegebene Auflösung.

2. Vorrichtung nach Anspruch 1, dadurch g e**kennzeichnet**, daß die Dicke (22) des Transportmediums gleich dem Meßabstand (21) ist und daß das Transportmedium (20) und das Meßsystem (30) reibend mit einem geringen Reibwert ausgelegt sind.

3. Vorrichtung nach einem der Ansprüche 1 oder 2, **dadurch gekennzeichnet, daß** der Meßabstand (21) kleiner oder gleich der Hälfte der örtlichen Auflösung ist.

4. Vorrichtung nach einem der Ansprüche 1 bis 3, **dadurch gekennzeichnet, daß** das Meßsystem (30) mindestens die Breite des Blattguts (10) aufweist.

5. Vorrichtung nach einem der Ansprüche 1 bis 4, **dadurch gekennzeichnet, daß** das Transportmedium (20) als rotierende Trommel (40) ausgeführt ist.

6. Vorrichtung nach einem der Ansprüche 1 bis 4, **dadurch gekennzeichnet, daß** Transportmedium (20) als Transportband (60) ausgeführt ist.

7. Vorrichtung nach einem der Ansprüche 1 bis 6, **dadurch gekennzeichnet, daß** das Andruckband (50) mindestens die Breite des Transportmediums (20) aufweist.

8. Vorrichtung nach einem der Ansprüche 1 bis 7, **dadurch gekennzeichnet, daß** das ein Kontrollmeßsystem (31) zur Überprüfung der Verschmutzung bzw. der Abnutzung des Transportmediums (20) vorgesehen ist.

## Claims

1. An apparatus for testing magnetic properties of sheet material such as bank notes or papers of value with a predetermined local resolution, comprising:
at least one magnetic measuring system (30), and
a transport medium (20) for guiding the sheet material (10) past the measuring system (30) at a measuring distance (21) defined between the sheet material (10) and the measuring system (30),
**characterized in that**
the transport medium (20) is disposed between the measuring system (30) and the sheet material (10),
a pressing band (50) urges the sheet material (10) onto the transport medium (20),
the measuring system (30) is covered in its entire width by the transport medium (20),
the measuring distance (21) is determined substantially by the thickness (22) of the transport medium, and
the thickness (22) of the transport medium is smaller than the predetermined resolution.

2. An apparatus according to claim 1, **characterized in that** the thickness (22) of the transport medium is equal to the measuring distance (21), and the transport medium (20) and measuring system (30) are designed to rub with a low coefficient of friction.

3. An apparatus according to either of claims 1 and 2, **characterized in that** the measuring distance (21) is smaller than or equal to one half of the local resolution.

4. An apparatus according to any of claims 1 to 3, characterized in that the measuring system (30) has at least the width of the sheet material (10).

5. An apparatus according to any of claims 1 to 4, characterized in that the transport medium (20) is designed as a rotating drum (40).

6. An apparatus according to any of claims 1 to 4, characterized in that the transport medium (20) is designed as a transport band (60).

7. An apparatus according to any of claims 1 to 6, characterized in that the pressing band (50) has at least the width of the transport medium (20).

8. An apparatus according to any of claims 1 to 7, characterized in that that a control measuring system (31) is provided for checking the soiling or attrition of the transport medium (20).

## Revendications

1. Dispositif pour examiner les propriétés magnétiques de matériaux en feuilles, tels que par exemple des billets de banque ou des papiers valeurs, muni d'une résolution locale prédéterminée, se composant :
- d'au moins un système magnétique de mesure (30) ; et
- d'un moyen de transport (20), avec lequel le matériau en feuilles (10) est amené à défiler à une distance de mesure (21) définie dans le système de mesure (30) entre le matériau en feuilles (10) et le système de mesure (30),
**caractérisé en ce que** :
- le moyen de transport (20) est disposé entre le système de mesure (30) et le matériau en feuilles (10) ;
- une bande de pressage (50) presse le matériau en feuilles (10) sur le moyen de transport (20) ;
- le système de mesure (30) est recouvert sur toute sa largeur par le moyen de transport (20) ;
- la distance de mesure (21) est déterminée sensiblement par l'épaisseur (22) du moyen de transport ; et
- l'épaisseur (22) du moyen de transport est inférieure à la résolution prédéterminée.

2. Dispositif selon la revendication 1, **caractérisé en ce que** l'épaisseur (22) du moyen de transport est égale à la distance de mesure (21) et **en ce que** le moyen de transport (20) et le système de mesure (30) sont disposés en friction l'un par rapport à l'autre avec un faible coefficient de friction.

3. Dispositif selon l'une quelconque des revendications 1 ou 2, **caractérisé en ce que** la distance de mesure (21) est inférieure ou égale à la moitié de la résolution locale.

4. Dispositif selon l'une quelconque des revendications 1 à 3, **caractérisé en ce que** le système de mesure (30) présente au moins la largeur du matériau en feuilles (10).

5. Dispositif selon l'une quelconque des revendications 1 à 4, **caractérisé en ce que** le moyen de transport (20) est réalisé sous la forme d'un tambour tournant (40).

6. Dispositif selon l'une quelconque des revendications 1 à 4, **caractérisé en ce que** moyen de transport (20) est réalisé sous forme de bande de transport (60).

7. Dispositif selon l'une quelconque des revendications 1 à 6, **caractérisé en ce que** la bande de pressage (50) présente au moins la largeur du moyen de transport (20).

8. Dispositif selon l'une quelconque des revendications 1 à 7, **caractérisé en ce qu'**il comporte un système de mesure de contrôle (31) pour contrôler l'encrassement ou l'usure du moyen de transport (20).
